# EUROPÄISCHE PATENTSCHRIFT

(11) **EP 2 462 080 B1**
(45) Veröffentlichungstag und Bekanntmachung des Hinweises auf die Patenterteilung: **14.09.2016**
(21) Anmeldenummer: 10747573.3
(22) Anmeldetag: 19.07.2010
(51) Int. Cl.: C04B 35/626, C04B 35/638, C04B 35/645, C04B 35/10, C04B 35/111

(54) **ALPHA-AL2O3-SINTERMATERIAL UND VERFAHREN ZUR HERSTELLUNG EINES HOCHDICHTEN UND FEINSTKRISTALLINEN FORMKÖRPERS AUS DIESEM MATERIAL SOWIE DESSEN VERWENDUNG**
ALPHA-ALUMINA BASED SINTERMATERIAL AND PROCESS FOR THE MANUFACTIURE OF HIGH-DENSITY, FINE - CRYSTALLINE FORMED BODY FROM SAID MATERIAL AND USE THEREOF
MATERIAU FRITTÉ À BASE D' ALPHA-ALUMINE ET PROCEDÉ POUR LA PRODUKTION D' UN PRODUIT FACONNÉ, MICROCRISTALLIN DE HAUTE DENSITÉ À PARTIR DE CE MATERIAU ET SON UTILISATION.

(30) Priorität: 30.07.2009 DE 102009035501
(43) Veröffentlichungstag der Anmeldung: 13.06.2012
(73) Patentinhaber: Fraunhofer-Gesellschaft zur Förderung der angewandten Forschung e.V., 80686 München (DE)
(72) Erfinder: REICHEL, Uwe, 07629 Hermsdorf (DE); LUDWIG, Henry, 07548 Gera (DE); KEMNITZ, Erhard, 10405 Berlin (DE)
(74) Vertreter: Oehmke, Volker
(86) Internationale Anmeldenummer: PCT/DE2010/050047
(87) Internationale Veröffentlichungsnummer: WO 2011/012125

(56) Entgegenhaltungen:
- WO-A1-88/06575
- WO-A2-95/28364
- US-A- 5 804 522
- PLEWA J ET AL: "Thermische Untersuchungen der Kristallisation von Korund" JOURNAL OF THERMAL ANALYSIS AND CALORIMETRY, KLUWER ACADEMIC PUBLISHERS, DO, Bd. 56, Nr. 1, 1. April 1999 (1999-04-01), Seiten 59-66, XP019252799 ISSN: 1572-8943
- Christof Stosiek, et. al.: "Infuence of milling, sonication and fluoride doping of pseudoboemites on their phase transformation behaviour to corundum." Institut für Chemie, Humboldt - Universität zu Berlin Journal of the European Ceramic Society 29 (2009) 2713-2720 8. Mai 2009 (2009-05-08), Seiten 2713-2720, XP002604548 [gefunden am 2010-10-12]
- J.J RASMUSSEN AND W. D. KINGERY: "Effect of Dopants on the Defect Structure of Single-Crystal Aluminium Oxide," JOURNAL OF THE AMERICAN CERAMIC SOCIETY, Bd. 53, Nr. 8, 1. November 1968 (1968-11-01), - 29. Januar 1970 (1970-01-29) Seiten 436-440, XP002604549

## Beschreibung

Die Erfindung betrifft ein α-Al₂O₃-Sintermaterial, das für die Herstellung von hochdichten, submikrokristallinen Formkörpern hoher Härte und Festigkeit geeignet ist. Die Erfindung betrifft weiterhin ein Verfahren, mit dem solche hochdichten, submikrokristallinen, keramischen Formkörpern hoher Härte und Festigkeit hergestellt werden können.

Zur Herstellung von keramischen Werkstoffen, die ein feinkörniges Gefüge, daraus resultierend hohe Sinterdichten sowie eine hohe Festigkeit und Härte aufweisen, wurden in der Vergangenheit im Wesentlichen zwei Ansätze verfolgt. Zum Einen wurde versucht, immer feinkörnigere Ausgangsstoffe wie Submikrometer- oder Nanometer-Pulver einzusetzen. Zum Anderen wurden den Ausgangsstoffen Substanzen beigemengt, die eine Senkung der Dichtsintertemperatur bewirken und das Kornwachstum während des Sinterns hemmen.

Eine Möglichkeit, gleichzeitig Härte und Zähigkeit eines keramischen Werkstückes zu erhöhen, wird in der DE 35 29 265 A1 dargestellt. Hier werden Titancarbid-Partikel einem Sintermaterial zugemischt und das Gemisch durch ein Press-Sinterverfahren zu einer Keramik verarbeitet. Alternativ kann das Gemisch auch eine erste Sinterstufe durchlaufen und wird dann mittels Heißisostatischem Pressen (HIP) nachverdichtet.

Die Möglichkeit des Dichtsinterns bei hohen Drücken (HIP) wird in einer Reihe von Verfahren zur Herstellung von Keramiken eingesetzt.

Um oxidkeramische Formkörper mit einer hohen Festigkeit und Härte herstellen zu können, darf das Gefüge nur eine geringe Menge an Verunreinigungen, d. h. Fremdatome, aufweisen. Jedwede Dotierung zum Zwecke der Senkung der Dichtsintertemperatur bringt jedoch zusätzliche Fremdatome ein.

Um eine effektive Senkung der Dichtsintertemperatur bei gleichzeitig geringer Zufuhr von Fremdatomen zu erreichen, wurden reaktive Metalloxide wie z. B. Magnesiumoxid dem Sintermaterial beigemengt. Solche Lösungen sind beispielsweise aus der EP 1 053 893 B1 und der CA 2 168 834 bekannt.

Allerdings konnten die Festigkeiten solcher Keramiken nicht über den üblichen Stand von 400 MPa angehoben werden, wie in der EP 0 756 586 B1 angeführt. Krell et al. zitieren dort auch den Stand der Veröffentlichungen hinsichtlich erreichbarer Obergrenzen für die Härte durch Korngrößenreduzierung, wobei bisher für Sinterprodukte aus α-Al₂O₃mit mittleren Korndurchmessern von 0,2 - 2 µm maximale Mikrohärten HV 0,2 von 2500 als Grenze angegeben wurden. Die Ursachen für die Begrenzung der erreichbaren Härte wurden dabei bisher mit der Behinderung der Versetzungsbewegungen in Verbindung gebracht, wenn die Korngrößen im Größenbereich der Versetzungen liegen (Mikrometerbereich). Gleichzeitig verweisen auch Krell et al. darauf, dass bei einer Kombination von kleinerer Gefügekorngröße < 1,5 µm mit einer relativen Sinterdichte > 98,5% und mit der weitestgehenden Vermeidung von Inhomogenitäten und Defekten, noch höhere Härten und Festigkeiten zu erreichen sein sollten. Im Ausführungsbeispiel 1 des o. g. Patents wird für eine Al₂O₃-Keramik mit einer Dichte von 3,941 g/cm³ (relative Dichte 98,9%) und einer mittleren Gefügekorngröße von 0,65 µm auch eine Mikrohärte von HV 1 = 3055 + 208 bzw. HV 10 = 2258 + 101 (für geschliffene Oberfläche) bzw. HV 10 = 2055 + 94 (für polierte Oberfläche) angegeben.

Der zweite Weg, um keramische Formkörper hoher Dichte und Festigkeit zu erhalten, besteht in der Verwendung von sehr feinkörnigen Ausgangsstoffen.

In der EP 0 756 586 B1 werden Sintermaterialien, Verfahren zu deren Herstellung und Verfahren zur Herstellung dichter und gleichzeitig fester Keramik aus feinkörnigem α-Al₂0₃-Korund beschrieben. Als wesentlicher Schritt für die Erhöhung von relativen Dichten und Festigkeiten der Keramiken wird der hohe Grad an Dispergierung der eingesetzten Substanzen zu einem stabilen Schlicker genannt. Der Zusatz von Dispergierhilfsmitteln und von die Gefügebildung beeinflussenden Metallen wird erwähnt. Ebenso, dass das α-Al₂O₃-Korund unter sauren bis neutralen Bedingungen (pH 3 bis 7) dispergiert wird. Die nach der EP 0 756 586 B1 hergestellten keramischen Formkörper weisen eine absolute Dichte zwischen 3,94 und 3,968 g/cm³ und Festigkeiten (3-Pkt-Biegung) von mehr als 800 MPa auf. Allerdings werden Festigkeiten ab 650 MPa bei mittleren Korngrößen von 0,65 µm, Festigkeiten von über 800 MPa bei mittleren Korngrößen von über 1 µm erreicht. Aus der WO95/28364 A2 ist ein Al₂O₃-Sintermaterial mit einem Gehalt von 95 bis 100 Volumen% α-Al₂O₃, einer relativen Sinterdichte von nicht weniger als 98,5%, einer dimensionslosen Defektdichte des gesinterten Materials von weniger als 30*10⁻³, einer Vickers-Kleinlasthärte von wenigstens 1750 und einer mittleren Korngröße des Gefüges von höchstens 2 µm bekannt. Um ein als Abrasiv zu verwendendes Al₂O₃-Sintermaterial zu Härten ist es möglich, dem Al₂O₃-Sintermaterial Oxide oder Fluoride wie Titanoxid oder Yttriumoxid zuzugeben, wie dies in der US 5.804.522 A offenbart ist.

Die bekannten Lösungen haben gemeinsam, dass hohe Sinterdichten, sehr geringe mittlere Korngrößen des gesinterten Materials und eine hohe Festigkeit als auch hochgradig homogene und defektarme Gefügestrukturen der Keramik bislang nicht gleichzeitig erreicht wurden.

Der Zusammenhang von hoher Härte bei feinerem Gefüge und gleichzeitiger homogener defektarmer Struktur wird mit der Erfindung erfolgreich realisiert.

Der Erfindung liegt die Aufgabe zugrunde, einen Sinterwerkstoff, vorzuschlagen, der ein feines Gefüge, eine geringe Defektdichte und eine hohe Härte aufweist. Es ist weiterhin Aufgabe der Erfindung, ein Verfahren zur Herstellung von hochdichten und submikrokristallinen Formkörpern zu schaffen.

Erfindungsgemäß wird die Aufgabe mittels eines α-Al₂O₃-Sintermaterials gemäss Anspruch 1.

Die Metall-Fluor-Verbindungen sind dabei entweder Metallfluoride der allgemeinen Form M"F_{y} oder Metallhydroxofluoride der allgemeinen Form Mₓ(OR)_{x_y}F_{y}. Dabei kennzeichnen die Symbole:
M Metall-Ion aus der zweiten, dritten oder vierten Hauptgruppe und jeder Nebengruppe des Periodensystems;
OR Alkoxid-Ion, wobei R ein beliebiger Substituent sein kann, vorzugsweise ein Wasserstoff-Ion;
F Fluor-lon;
x Ladungszahl des Metall-Ions;
y Anzahl der Fluor-Ionen;
x-y Anzahl der Alkoxid-Ionen;

Bei den verwendeten Metallfluoriden bestimmt sich das stöchiometrische Verhältnis zwischen Metall- und Fluor-Ionen durch die Ladung des Metall-Ions. Für die Indizes x und y gilt dabei: x = y. Solche Metallfluoride sind beispielsweise AlF₃ oder MgF₂. Sie werden als trockenes, nanoskopisches HS-Pulver (high surface-Pulver) oder in Form eines Sols für die Herstellung des erfindungsgemäßen Sintermaterials und für das erfindungsgemäße Verfahren verwendet.

In einer anderen Variante werden die Metallhydroxofluoride in Form eines Sols als organische (alkoholische) Metalloxid-Fluorid-Lösung für die Herstellung des erfindungsgemäßen Sintermaterials und das erfindungsgemäße Verfahren verwendet. Entsprechend der Varianten der Fluoridsynthese können die Metallhydroxofluoride in unterschiedlichen Stöchiometrien erzeugt werden. Sie können beispielweise sein:

Al(OH)₀.₈F_{2,2},Al(OH)_{1,5}F_{1,5}, Mg(OH)_{0,5}F_{1,5}oder Mg(OH)F.

Metall-Fluor-Verbindungen der allgemeinen Formen MₓF_{y} oder Mₓ(OR)_{x-y}F_{y} können sowohl als Sol als auch als HS-Pulver für die Herstellung des erfindungsgemäßen Sintermaterials und das erfindungsgemäße Verfahren eingesetzt werden.

Als Rohstoff für das α-Al₂O₃-Sintermaterial wird eine Tonerde (α-Al₂O₃) verwendet, deren chemische Reinheit mindestens 99,8 Masse%, besser aber noch 99,9 Masse% beträgt.

Die als Rohstoff für das α-Al₂O₃-Sintermaterial verwendete Tonerde hat eine hohe spezifische Oberfläche von nicht weniger als 10 m²/g. Die Körnung von 50% der Masse der Tonerde (d₅₀-Wert) weist einen Wert von nicht mehr als 0,3 µm, vorzugsweise von nicht mehr als 0,2 µm auf.

An die chemische Reinheit der Tonerde werden hohe Anforderungen gestellt. Bezogen auf die Masse des α-Al₂O₃ beträgt der Anteil von verunreinigenden Verbindungen in Summe weniger als 100 ppm, vorzugsweise weniger als 50 ppm. Solche Verunreinigungen können z. B. SiO₂, K₂O und CaO, aber auch weitere anorganische Verbindungen sein.

Der Anteil von unerwünschten Metalloxiden soll noch geringer sein und weniger als 50 ppm, vorzugsweise aber weniger als 10 ppm, bezogen auf die Masse des α-Al₂O₃, betragen.

Der α-Al₂O₃Tonerde werden bis zu 2000 ppm, vorzugsweise aber nicht mehr als 1000 ppm, an Metall-Fluor-Verbindungen zugesetzt.

Nach der Zugabe der Metall-Fluor-Verbindungen soll das α-Al₂O₃-Sintermaterial in Summe, bezogen auf die Masse des α-Al₂0₃, weniger als 100 ppm, vorzugsweise weniger als 50 ppm, Verunreinigungen enthalten.

Das gesinterte Material weist eine Sinterdichte von nicht weniger als 3,93 g/cm³, was 98,5% der maximale erreichbaren Sinterdichte von 3,99 g/cm³ entspricht.

Erfindungsgemäß wird die Aufgabe auch mittels eines Verfahrens zur gemäss Anspruch 4.

Das Verfahren verwendet als Rohstoff eine Tonerde (α-Al₂O₃), deren chemische Reinheit mindestens 99,8 Masse%, besser aber noch 99,9 Masse% beträgt.

Die verwendete Tonerde (α-Al₂O₃) hat eine hohe spezifische Oberfläche von nicht weniger als 10 m²/g und eine Körnung, deren d₅₀-Wert nicht mehr als 0,3 µm, vorzugsweise nicht mehr als 0,2 µm beträgt. Es ist nicht zwingend notwendig, einen Rohstoff mit einheitlicher Korngröße zu verwenden.

Bezogen auf die Masse des (α-Al₂O₃) beträgt der Anteil von verunreinigenden Verbindungen in Summe weniger als 100 ppm, vorzugsweise weniger als 50 ppm. Solche Verunreinigungen können z. B. SiO₂, K₂O und CaO, aber auch weitere anorganische Verbindungen sein.

Der Anteil von unerwünschten Metalloxiden soll weniger als 50 ppm, vorzugsweise aber weniger als 10 ppm, bezogen auf die Masse des α-Al₂O₃, betragen.

Der Rohstoff wird in einer Flüssigkeit, vorzugsweise in Wasser, unter Zusatz von organischen Substanzen wie Dispergatoren, Bindern und Gleitmitteln, wie sie für die Herstellung von keramischen Stoffen üblich sind, mit Hilfe einer technisch- mechanischen Vorrichtung dispergiert und eine Suspension erzeugt.

Technisch-mechanische Vorrichtungen können solche sein, die das Gemisch aus Rohstoff und zugesetzten Substanzen wirkungsvoll vermengen. Dabei ist die Wirkung der Homogenisierung z. B. die Auflösung von Pulveraggregationen und die gleichmäßige Verteilung aller Mischungsbestandteile von besonderer Bedeutung. Es können mechanische Vorrichtungen wie z. B. Rührwerke oder Kugelmühlen verwendet werden. Außerdem können Druckwellen auf und in das Gemisch geleitet werden, um eine Dispergierung und Homogenisierung zu erreichen Ein Beispiel für eine solche Ausführung ist die Beaufschlagung mit Ultraschall. Es können auch mehrere Vorrichtungen bzw. Verfahren zur Dispergierung und Homogenisierung miteinander kombiniert und nacheinander oder zeitgleich angewendet werden.

Die Beimengung von in der Keramikherstellung üblichen Dispergatoren beträgt zwischen 0,5 und 1,5%, die der Binde- und Gleitmittel zwischen 1,5 und 7%.

Der pH-Wert, unter den die Dispergierung des erfindungsgemäßen Verfahrens erfolgt, liegt im Bereich von pH 7 bis pH 10, vorzugsweise bei pH 9.

Es ist ein Vorteil des erfindungsgemäßen Verfahrens, dass die Dispergierung und Homogenisierung der Ausgangsmaterialien sowie die Stabilisierung des Schlickers unter neutralen bis basischen Bedingungen erfolgt. Im Gegensatz zu den weithin üblichen Dispergierungen unter sauren Bedingungen kann damit die korrosive Belastung der Mischvorrichtungen deutlich reduziert werden.

Zu Beginn des Dispergierungsvorganges werden dem Gemisch, bezogen auf die Masse des α-Al₂0₃, bis zu 2000 ppm, vorzugsweise nicht mehr als 1000 ppm, Fluorid in Form von Metall-Fluor-Verbindungen beigemengt. Diese können Metallfluoride der Form MₓF_{y} oder Metallhydroxofluoride der Form Mₓ(OR)_{x-y}F_{y} sein. Die Metall-Fluor-Verbindungen besitzen eine reaktive Oberfläche von 100 — 400 m²/g und liegen als nanoskopische Pulver (HS-MF, high surface metal fluoride] oder in Form einer organischen (alkoholischen) Lösung (Sol) vor.

Ein Sol ist zudem gegenüber einem Gel deshalb vorteilhaft, als die hydrolysierten (Metall)- Alkoholat-Partikel nur in sehr geringem Maße untereinander vernetzt sind.

Die Verwendung einer Lösung der Metall-Fluor-Verbindungen als Sol erlaubt einen höheren Grad der Dispergierung als der Einsatz eines Pulvers. Damit wird eine noch homogenere Verteilung der Dotierung und im Ergebnis eine homogenere Verteilung der Korngrößen im Gefüge des gesinterten Materials erreicht.

Nach der Zugabe der Metall-Fluor-Verbindungen soll das α-Al₂0₃-Sintermaterial in Summe, bezogen auf die Masse des α-Al₂O₃, weniger als 200 ppm, vorzugsweise weniger als 100 ppm, Verunreinigungen enthalten.

Das Resultat der Dispergierung und Homogenisierung ist ein stabiler, gießfähiger Schlicker. Aus diesem können in weiteren Verfahrensschritten Grünkörper durch die Anwendung des Verfahrens des Schlickergusses oder aber durch die Herstellung pressfähigen Granulats, insbesondere von pressfähigem Sprühgranulat geformt werden.

Bei Anwendung des Gießverfahrens wird der Gießschlicker in saugfähige Formen eingebracht und ein homogener Grünkörper hergestellt. Die Gründichte beträgt dabei nicht weniger als 60% der maximal erreichbaren Sinterdichte von 3,99 g/cm³ des gesinterten Materials, was einer Dichte des Grünkörpers von 2,39 g/cm³ entspricht.

Soll ein pressfähiges Granulat, insbesondere ein Sprühgranulat hergestellt werden, wird der Schlicker von groben Bestandteilen befreit und mittels eines geeigneten Verfahrens granuliert. Solche Verfahren können z. B. die Granulierung in Sprühtürmen oder durch Wirbelschichttrocknung sein.

Das entstandene Granulat wird so abgesiebt, dass die in den weiteren Schritten verwendete Fraktion des Granulats eine Korngrößenverteilung mit einer Untergrenze von nicht weniger als 10 µm, vorzugsweise nicht weniger als 20 µm und eine Obergrenze von nicht mehr als 150 µm, vorzugsweise nicht mehr als 120 µm, aufweist. Der mittlere Korndurchmesser der Granulate d₅₀ sollte vorzugsweise zwischen 20 und 60 µm betragen.

Die Restfeuchte des pressfähigen Granulats beträgt weniger als 1%, vorzugsweise weniger als 0,5%.

Der Anteil von organischen Zusätzen beträgt nicht mehr als 8 Masse%, vorzugsweise nicht mehr als 3 Masse%.

Das pressfähige Granulat wird mittels uniaxialen Pressens bei Drücken im Bereich von 150 bis 300 MPa, vorzugsweise bei 200 MPa, zu einem Grünkörper geformt. Dabei kann der Pressvorgang vorteilhafterweise Perioden umfassen, in denen der Pressdruck konstant gehalten wird (Haltezeiten). Diese dienen der Entgasung des gepressten Granulats, der optimalen Deformation des Granulats und der Relaxation von Wandreibungen. Das uniaxiale Pressen soll unter definierten Umgebungsbedingungen, insbesondere bei einer relativen Luftfeuchte von nicht mehr als 40% und Arbeitstemperaturen zwischen etwa 20°C und 23°C erfolgen.

Der durch das uniaxiale Pressen erzeugte Grünkörper hat eine Gründichte von nicht weniger als 58% (2,31 g/cm³) der maximalen Sinterdichte.

Die durch uniaxiales Pressen hergestellten Grünkörper werden anschließend thermisch entbindert. Dazu werden die Grünkörper mit einer Rate von 10 bis 20 K/h, z. B. über 100 bis 120 h, auf etwa 1000°C erhitzt und anschließend über einen Zeitraum von einigen Stunden wieder auf Raumtemperatur definiert abgekühlt. Es entsteht ein Formkörper, der als "Weißling" bezeichnet wird.

Für die durch Schlickerguss hergestellten Grünkörper ist der Verfahrensschritt der thermischen Entbinderung optional.

Auf die thermische Entbinderung folgt ein mehrstufiger Sinterprozess. Dabei können zwei grundsätzliche Wege eingeschlagen werden: die Sinterung ohne Nachverdichtung und die Sinterung mit Nachverdichtung. Beiden Wegen ist ein erster Sinterprozess gemeinsam.

In diesem ersten Sinterprozess wird der Weißling definiert auf Temperaturen im Bereich von 1200°C und 1400°C mit einer Rate von vorzugsweise 2 K/min gebracht, dort für eine oder mehrere Stunden gehalten und anschließend definiert, vorzugsweise mit 10 K/min, abgekühlt. In einer weiter Ausführung der Erfindung kann die Erwärmung auch stufenweise erfolgen. Die Haltezeit wird so lang gewählt, dass keine offene Porosität mehr im Formkörper vorhanden ist.

Wird der Formkörper ohne Nachverdichtung hergestellt, schließt sich ein Sinterprozess an, der als "Dichtsintern" bezeichnet wird. Dabei wird der im ersten Sinterprozess erhaltene Formkörper auf Temperaturen im Bereich von 1150°C und 1450°C, vorzugsweise auf 1300°C erhitzt und für einige Stunden, vorzugsweise für 2 h, bei diesen Temperaturen gehalten.

Selbst bei einer drucklosen Sinterung ohne Nachverdichtung werden Sinterdichten von nicht weniger als 3,93 g/cm³ (98,5%) erreicht.

In einer vorteilhaften Ausführung des erfindungsgemäßen Verfahrens kann der Prozess der Entbinderung und der Sinterung als ein kontinuierlicher Gesamtprozess gestaltet sein.

Der zweite Herstellungsweg beinhaltet eine Nachverdichtung des Formkörpers nach dem ersten Sinterprozess. Dabei wird der Formkörper unter Drücken von ≥ 100 MPa und Temperaturen im Bereich von 1150°C bis 1450°C, vorzugsweise im Bereich von 1250°C und 1400°C, über einen Zeitraum von mehreren Stunden nachverdichtet.

Die Nachverdichtung mittels Heißisostatischen Pressens (HIP) kann dabei unter Verwendung eines Schutzgases erfolgen. In einer vorteilhaften Ausführung wird Argon als Schutzgas verwendet.

Die gesinterten Formkörper weisen eine Sinterdichte von nicht weniger als 3,93 g/cm³, die sowohl gesinterten als auch nachverdichteten Formkörper eine Sinterdichte von nicht weniger als 3,96 g/cm³ (> 99,3) auf. Die mittlere Korngröße d₅₀ beträgt für gesinterte Formkörper mit und ohne Nachverdichtung nicht mehr als 1 µm, vorzugsweise nicht mehr als 0,5 µm.

Für die endgültige Formgebung und Oberflächengestaltung können die gesinterten Formkörper mechanisch nachbearbeitet werden. Mechanische Bearbeitungen können dabei Verfahren wie z. B. das Schleifen oder Läppen sein.

Die durch eine Bearbeitung des gesinterten Formkörpers möglicherweise entstandenen Spannungen oder Mikrorisse können durch eine weitere thermische Behandlung, z. B. mittels Glühen des Formkörpers entfernt werden.

Die Messung der Festigkeit kann durch geeignete Versuchsanordnungen und unter Beachtung standardisierender Normen und Vorschriften erfolgen. In einer vorteilhaften Anwendung erfolgt die Festigkeitsmessung mittels Doppelringbiegeversuch. Für die Angabe der Härte der gesinterten Formkörper wird im Weiteren die Vickers-Härte (Mikrohärte HV 0,1) angegeben.

Die so hergestellten Formkörper haben eine Bruchfestigkeit (Doppelringbiegeversuch) von 700 MPa und eine Mikrohärte HV 0,1 = 3000.

Die wesentlichen, durch die Erfindung erreichten Verbesserungen, im Vergleich zum bekannten Stand der Technik, beruhen auf der Oberflächenadsorption der verwendeten nanoskaligen Metall-Fluor-Verbindung an aktive, nanoskalige Al-Zentren statt der Adsorption an Al₂O₃-Kornoberflächen, wie es bei Verwendung von Metalloxiden der Fall ist. Eine solche Anlagerung von Metalloxiden an bestehende Körner innerhalb des Gefüges - wie beim Al₂O₃+MgO - führt zu einer Vergrößerung dieser Körner und zur Bildung von Mischkristallen. Dagegen bewirkt die Anlagerung der Metallfluoride an aktive Al-Zentren eine erhöhte Reaktivität der beteiligten Komponenten, ohne dabei die räumliche Ausdehnung dieser zu vergrößern. Es wird eine Senkung der benötigten Sintertemperaturen sowie eine Hemmung von unerwünschtem Kornwachstum während der Wärmebehandlungsphase bewirkt. Ein besonderer Vorteil der Erfindung ist, dass sehr feinkörnige und hochreine Ausgangsstoffe für die Herstellung der Keramiken eingesetzt werden können, um ein sehr feinkörniges Gefüge mit hoher Festigkeit zu erzielen, wobei gleichzeitig die Einbringung von Fremdatomen (Dotierungen) niedrig gehalten werden kann.

Zudem wird durch die Eigenschaften des erfindungsgemäßen Sintermaterials und die Anwendung des erfindungsgemäßen Verfahrens in äußerst vorteilhafter Weise die Voraussetzung zur Herstellung transparenter, polykristalliner Al₂O₃-Keramiken geschaffen.

Die Erfindung wird nachstehend anhand von Ausführungsbeispielen näher erläutert.

Die angegeben Verfahrensparameter verstehen sich als beispielhaft und können in solch einem Rahmen abgeändert werden, dass dem Ziel der Erfindung trotzdem entsprochen wird. Insbesondere können Anpassungen bei der Wärmebehandlung und Sinterung von mittels Schlickergussverfahren erzeugter Formkörper nötig werden, da diese ein größeres Volumen zu Oberflächen Verhältnis, eine komplexere Formgebung und größere Materialdicken aufweisen können.

In einem Ausführungsbeispiel wird für die Herstellung des erfindungsgemäßen α-Al₂O₃-Sintermaterial und die Durchführung des Verfahrens zur Herstellung hochdichter und submikrokristalliner Formkörper α-Al₂O₃ als Rohstoff verwendet, welches eine chemische Reinheit von 99,99 Masse%, eine spezifische Oberfläche von 13 m²/g und eine mittlere Korngröße d₅₀ von 0,13 µm besitzt.

Es werden 3000 g des Rohstoffes mit 1,6 1 destilliertem Wasser versetzt. Weiterhin werden dem Gemisch 0,7% Verflüssiger und 5,75% Binde- und Gleitmittel hinzugefügt. Die Metall-Fluor-Verbindung wird in Form eines HS-MF als nanoskopisches Pulver zugegeben. Im Ausführungsbeispiel sind 3,1 g eines Magnesiumfluorid-Nanopulvers (HS-MgF₂) mit einem Fluor-Gehalt von 48,8%, um im Versatz einen Fluorgehalt von 0,05% [500 ppm], bezogen auf den α-Al₂O₃ -Anteil, zu erzielen.

In weiteren Ausführungen des erfindungsgemäßen Verfahrens können die Verhältnisse der dem Gemisch zugefügten Substanzen zueinander so variiert werden, dass die geforderten Korngrößenverteilungen und Mindestfestigkeiten des gesinterten Materials erreicht werden.

Das Gemisch wird mittels einer Rührwerkskugelmühle bei pH 9 für etwa 30 min dispergiert und homogenisiert. Anschließend wird der entstandene Schlicker über ein 100 µm-Sieb gegeben.

Es kann ebenfalls vorteilhaft sein, Dispergierung und Homogenisierung des Gemisches bei pH-Werten zwischen pH 7 und pH 13 durchzuführen.

Der erhaltene stabile Schlicker wird in einem Sprühturm bei einer Turmtemperatur von etwa 200°C versprüht. Das erhaltene Sprühgranulat wird mittels eines 315 µm-Siebes fraktioniert. Die das Sieb passierenden Fraktion hat eine Korngrößenverteilung mit einem d₅₀-Wert von 30 µm. Die Restfeuchte des Sprühgranulats beträgt etwa 0,4%.

Das Sprühgranulat wird in einer hydraulischen Presse mittels uniaxialen Pressens unter einem Druck von 200 MPa zu Scheiben (Grünlinge) mit einem Durchmesser von 25 mm und einer Höhe von 1 mm geformt.

In weiteren Ausführungen können die Grünlinge über 40 mm im Durchmesser und bis etwa 5 mm in der Höhe betragen.

Diese Scheiben werden in einem Kammerofen mit thermischer Nachverbrennung entbindert. Über einen Zeitraum von 120 h werden die gepressten Grünlinge stetig auf etwa 1000°C erhitzt und anschließend über einen Zeitraum von 6 h wieder auf Raumtemperatur abgekühlt.

Die durch die thermische Entbinderung erhaltenen Weißlinge werden in einem Hochtemperaturofen bei einer Aufheizrate von 2 K/min auf 1300°C erhitzt und dort für 2 h gehalten. Die Abkühlung auf Raumtemperatur erfolgt mit einer Rate von 10 K/min.

Die nun vorgesinterten Formkörper werden in einer Heißisostatischen Presse unter Argonatmosphäre bei einem Druck von 100 MPa und einer Temperatur von etwa 1350°C über einen Zeitraum von 2 h nachverdichtet.

Nach Abkühlung der nachverdichteten Formkörper werden diese auf einer Zweischeibenfeinschleifmaschine mit z. B. Diamant D64C50 bearbeitet. Danach erfolgt das Läppen mit z.B. Borcarbid der Körnung F600 oder Diamantkörnung und anschließendes Polieren mittels Diamantsuspension auf eine Oberflächengüte von Ra < 15 nm.

Um die durch das Schleifen und Läppen induzierten Spannungen und Mikrorisse zu entfernen, werden die Formkörper in einem Kammerofen bei einer Temperatur von 1200-1300°C nochmals geglüht.

Die Bestimmung der mittleren Gefügekorngröße d₅₀ erfolgt mittels rasterelektronenmikroskopischen Auswertungen polierter Anschliffe des fertigen Formkörpers.

Durch das, gegenüber herkömmlicherweise eingesetzten Metalloxiden veränderte, Adsorptionsverhalten der verwendeten Metall-Fluor-Verbindungen können sowohl die für den Sinterprozess benötigten Temperaturen gesenkt als auch der Anteil an Fremdatomen reduziert werden. Gleichzeitig ist es möglich, Ausgangsstoffe mit submikrometrischer Körnung zu verwenden. Das erfindungsgemäße Sintermaterial erlaubt unter Anwendung des erfindungsgemäßen Verfahrens die Herstellung von hochdichten, feinstkörnigen, keramischen Formkörpern mit geringer Defektdichte. Solche Formkörper können in einer Reihe von Anwendungen eingesetzt werden, insbesondere in solchen, in denen harte und feste Formkörper mit weitestgehend inerten Oberflächen gefordert werden. Anwendungen von solcherart keramischen Formkörpern reichen von hochverschleißfesten Bauteilen, Schleifkörpern, Werkzeugen und Werkzeugteilen über die Verwendung als Dielektrikum in der Hochfrequenztechnik oder als Trägermaterial für z. B. elektronische Dickschicht-Hybridschaltungen bis hin zur Verwendung für medizinische Implantate und als ballistische Panzerung z. B. gegen Geschosseinwirkungen. Das erfindungsgemäße Sintermaterial und die Anwendung des erfindungsgemäßen Verfahrens zur Herstellung hochdichter, feinstkörniger Formkörper schafft außerdem die Voraussetzung zur Herstellung polykristalliner und transparenter polykristalliner Al₂O₃-Keramiken. Es ist weiterhin ein vorteilhafter Aspekt der Erfindung, dass für die Herstellung des erfindungsgemäßen Sintermaterials sowie für die Durchführung des Verfahrens, die in der keramischen Industrie ohnehin üblichen technischen Vorrichtungen verwendet werden können.

## Patentansprüche

1. α-Al₂O₃-Sintermaterial mit einem Gehalt von wenigstens 95 Masse% α-Al₂O₃, einer Sinterdichte von nicht weniger als 3,93 g/cm³ und einer dimensionslosen Defektdichte des gesinterten Materials von nicht mehr als 3*10⁻², **dadurch gekennzeichnet, dass**
- das α-Al₂O₃-Sintermaterial Metall-Fluor-Verbindungen enthält, wobei die Metall-Fluor-Verbindungen als nanoskopische Partikel vorhanden sind, deren spezifische Oberfläche nicht weniger als 100 m²/g beträgt,
- das gesinterte α-Al₂O₃-Sintermaterial eine mittlere Gefügekorngröße d₅₀ von weniger als 0,5 µm aufweist,
- das gesinterte α-Al₂O₃-Sintermaterial eine Biegefestigkeit von mindestens 700 MPa besitzt und
- das gesinterte α-Al₂O₃-Sintermaterial eine Mikrohärte von nicht weniger als HV 0,1 = 3000 aufweist.

2. α-Al₂O₃-Sintermaterial nach Anspruch 1, **dadurch gekennzeichnet, dass** ein verwendeter α-Al₂0₃ Rohstoff ein Gehalt von mindestens 99,8% α-Al₂O₃ aufweist.

3. α-Al₂O₃-Sintermaterial nach Anspruch 2, **dadurch gekennzeichnet, dass** der verwendete Rohstoff eine Korngröße d₅₀ von nicht mehr als 0,3 um aufweist.

4. Verfahren zur Herstellung eines hochdichten und submikrokristallinen keramischen Formkörpers aus einem α-Al₂O₃ - Sintermaterial, wobei
- als Rohstoff des α-Al₂O₃ - Sintermaterials eine Tonerde α-Al₂O₃ mit einer chemischen Reinheit von mindestens 99,8 Masse%, einer spezifischen Oberfläche von nicht weniger als 10 m²/g und einer Körnung, deren d₅₀-Wert nicht mehr als 0,3 µm beträgt, verwendet wird,
- der Rohstoff unter neutralen bis basischen Bedingungen in einer Flüssigkeit unter Zusatz von organischen Substanzen dispergiert, homogenisiert und eine Suspension erzeugt wird, wobei zu Beginn des Dispergierungsvorganges bezogen auf die Masse des α-Al₂0₃ bis zu 2000 ppm Metall-Fluor-Verbindungen, deren spezifische Oberfläche nicht weniger als 100 m²/g beträgt, beigemengt werden,
- die Suspension einem formgebenden Verfahren zugeführt und ein Grünkörper als ein ungesintertes Vorprodukt erzeugt wird, dessen Dichte nicht weniger als 58% (2,31 g/cm³) der maximal erreichbaren Sinterdichte beträgt und
- und der Grünkörper gesintert wird, bis eine Sinterdichte von nicht weniger als 3,93 g/cm³ (98,5%) erreicht ist.

5. Verfahren nach Anspruch 4, **dadurch gekennzeichnet, dass** die zugesetzten Metall-Fluor-Verbindungen Metallfluoride der allgemeinen Form MₓF_{y} sind, wobei die Symbole folgende Bedeutung haben: M = Metall-Ion aus der zweiten, dritten oder vierten Hauptgruppe und jeder Nebengruppe des Periodensystems; F = Fluor- Ion; x = Ladungszahl des Metall-lons; y = Anzahl der Fluor-Ionen, wobei x = y gilt.

6. Verfahren nach Anspruch 4, **dadurch gekennzeichnet, dass** die zugesetzten Metall-Fluor-Verbindungen Metallhydroxofluoride der allgemeinen Form Mₓ(OR)ₓ-_{y}F_{y} sind, wobei die Symbole folgende Bedeutung haben: M = Metall-Ion aus der zweiten, dritten oder vierten Hauptgruppe und jeder Nebengruppe des Periodensystems; F = Fluor- Ion; OR = Alkoxid-Ion, wobei R ein beliebiger Substituent sein kann, vorzugsweise ein Wasserstoff-Ion; x = Ladungszahl des Metall-Ions; y = Anzahl der Fluor-Ionen; x-y = Anzahl der Alkoxid-Ionen.

7. Verfahren nach Anspruch 5 oder 6, **dadurch gekennzeichnet, dass** die zugesetzten Metall-Fluor-Verbindung als trockenes, nanoskopisches Pulver zugegeben werden.

8. Verfahren nach Anspruch 5 oder 6, **dadurch gekennzeichnet, dass** die zugesetzten Metall-Fluor-Verbindung als Sol zugegeben werden.

9. Verfahren nach Anspruch 4, **dadurch gekennzeichnet, dass** die Dispergierung und Homogenisierung bei pH-Werten zwischen 7 und 10 erfolgt.

10. Verfahren nach Anspruch 4, **dadurch gekennzeichnet, dass** der Grünkörper zum Zweck der thermischen Entbinderung, mit einer Rate von 10 bis 20 K/h auf etwa 1000°C erhitzt und danach über einen Zeitraum von etwa 6 h wieder auf Raumtemperatur abgekühlt wird, wodurch aus dem Grünkörper ein als Weißling bezeichneter Formkörper erzeugt wird.

11. Verfahren nach Anspruch 10, **dadurch gekennzeichnet, dass** der Formkörper bei einer Temperaturzunahme von 2 K/min auf eine Temperatur im Bereich von 1200 und 1400°C erwärmt, dort für 2 h gehalten und anschließend bei einer Temperaturabnahme von 10 K/min auf Raumtemperatur abgekühlt wird.

12. Verfahren nach Anspruch 11, **dadurch gekennzeichnet, dass** der vorgesinterte Formkörper mittels Heißisostatischem Pressens bei einem Druck >100 MPa und einer Temperatur im Bereich von 1150 bis 1450 °C für etwa 2 h nachverdichtet wird und so eine relative Sinterdichte von mindestens 3,96 g/cm³ (99,3%) erreicht wird.

13. Verwendung des α-Al₂0₃-Sintermaterials nach einem der Ansprüche 1 bis 3 für die Herstellung von verschleißarmen Bauteilen, Implantaten, Werkzeugen und Werkzeugteilen, Schleifkörpern, Dielektrika, Trägern oder Medien für Datenspeicher, ballistische Panzerungen und transparenter polykristalliner Al₂O₃-Keramiken.

## Claims

1. α-Al₂O₃ sintering material with a content of at least 95 mass% α-Al₂O₃, a sintered density of no less than 3.93 g/cm³, and a dimensionless defect density of the sintered material of no more than 3*10⁻², **characterized in that**
- the α-Al₂O₃ sintering material contains metal-fluorine compounds, wherein the metal-fluorine compounds are present as nanoscale particles having a specific surface area of no less than 100 m²/g,
- the sintered α-Al₂O₃ sintering material has an average microstructure grain size d₅₀ of less than 0.5 µm,
- the sintered α-Al₂O₃ sintering material has a bending strength of at least 700 MPa, and
- the sintered α-Al₂O₃ sintering material has a micro-hardness of no less than HV 0.1 = 3000.

2. α-Al₂O₃ sintering material according to claim 1, **characterized in that** a used α-Al₂O₃ raw material has a content of at least 99.8 % α-Al₂O₃.

3. α-Al₂O₃ sintering material according to claim 2, **characterized in that** the used raw material has a grain size d₅₀ of no more than 0.3 µm.

4. Method for producing high-density and submicrocrystalline ceramic molded bodies from an α-Al₂O₃ sintering material, wherein
- an alumina α-Al₂O₃ with a chemical purity of at least 99.8 mass%, a specific surface area of no less than 10 m² / g, and a grain size with a d₅₀ value of no more than 0.3 µm is used as raw material of the α-Al₂O₃ sintering material,
- the raw material disperses, homogenises and a suspension is generated under neutral to alkaline conditions in a liquid with the addition of organic substances, wherein at the beginning of the dispersion process, relating to the mass of the α-Al₂O₃, up to 2000 ppm metal-fluorine compounds having a specific surface area of no less than 100 m²/g are added,
- the suspension is supplied to a shaping method and a green body is generated as an unsintered pre-product, the density of which is no less than 58% (2.31 g/cm³) of the maximum achievable sintering density, and
- the green body is sintered until a sintering density of no less than 3.93 g/cm³ (98.5%) is achieved.

5. Method according to claim 4, **characterized in that** the added metal-fluorine compounds are metal fluorides of the general form MₓF_{y}, wherein the symbols have the following meaning: M = metal ion of the second, third or fourth main group and each auxiliary group of the periodic table; F = fluorine ion; x = valency of the metal ion; y = number of fluorine ions, wherein x = y applies.

6. Method according to claim 4, **characterized in that** the added metal-fluorine compounds are metal hydroxofluorides of the general form Mₓ(OR)_{x-y}F_{y}, wherein the symbols have the following meaning: M = metal ion of the second, third or fourth main group and each auxiliary group of the periodic table; F = fluorine ion; OR = alkoxide ion, wherein R can be an arbitrary substituent, preferably a hydrogen ion; x = valency of the metal ion; y = number of fluorine ions; x-y = number of alkoxide ions.

7. Method according to claim 5 or 6, **characterized in that** the added metal-fluorine compounds are added as dry, nanoscale powder.

8. Method according to claim 5 or 6, **characterized in that** the added metal-fluorine compounds are added as sol.

9. Method according to claim 4, **characterized in that** the dispersing and homogenizing is carried out at pH values between 7 and 10.

10. Method according to claim 4, **characterized in that**, for the purpose of thermal debinding, the green body is heated to approximately 1000 °C at a rate of 10 to 20 K/h and is afterwards cooled down again to ambient temperature over a period of 6 h, whereby a molded body called white body is generated from the green body.

11. Method according to claim 10, **characterized in that** the molded body is heated to a temperature in the range of 1200 and 1400 °C at a temperature increase of 2 K/min, is held at this temperature for 2 h, and is afterwards cooled down to ambient temperature at a temperature decrease of 10 K/min.

12. Method according to claim 11, **characterized in that** the pre-sintered molded body is redensified by means of hot isostatic pressing at a pressure >100 MPa and a temperature in the range of 1150 to 1450 °C for about 2 h and thus a relative sintering density of at least 3.96 g/cm³ (99.3%) is achieved.

13. Use of the α-Al₂O₃ sintering material according to one of claims 1 to 3 for producing low-wear components, implants, tools and tool parts, abrasive bodies, dielectrics, carriers or media for data storages, ballistic armouring and transparent polycrystalline α-Al₂O₃ ceramics.

## Revendications

1. Matériau fritté à base de α-Al₂O₃ avec une teneur d'au moins 95 % en masse de α-Al₂O₃, une densité frittée de pas moins de 3,93 g/cm³, et une densité de défauts sans dimension du matériau fritté de pas plus de 3*10⁻², **caractérisé en ce que**
- le matériau fritté à base de α-Al₂O₃ contient des composés métal-fluor, les composés métal-fluor étant présents en tant que particules nanoscopiques ayant une surface spécifique de pas moins de 100 m² / g,
- le matériau fritté à base de α-Al₂O₃ a une grosseur de grain microstructurel moyenne d₅₀ de moins de 0,5 µm,
- le matériau fritté à base de α-Al₂O₃ a une résistance de flexion d'au moins 700 MPa, et
- le matériau fritté à base de α-Al₂O₃ a une microdureté de pas moins de HV 0,1 = 3000.

2. Matériau fritté à base de α-Al₂O₃ selon la revendication 1, **caractérisé en ce qu'**une matière première à base de α-Al₂O₃ utilisée a une teneur d'au moins 99,8 % de α-Al₂O₃.

3. Matériau fritté à base de α-Al₂O₃ selon la revendication 2, **caractérisé en ce que** la matière première utilisée a une grosseur de grain d₅₀ de pas plus de 0,3 µm.

4. Procédé de fabrication d'un corps moulé céramique de haute densité et submicrocristallin à partir d'un matériau fritté à base de α-Al₂O₃, dans lequel
- une alumine α-Al₂O₃ avec une pureté chimique d'au moins 99,8 % en masse, une surface spécifique de pas moins de 10 m² / g et une grosseur de grain, dont la valeur d₅₀ ne dépasse pas 0,3 µm, est utilisée en tant que matière première du matériau fritté à base de α-Al₂O₃,
- la matière première disperse, homogénéise et une suspension est générée dans des conditions neutres à basiques dans un liquide avec l'addition de substances organiques, au début du processus de dispersion, par rapport à la masse du α-Al₂O₃, jusqu'à 2000 ppm de composés métal-fluor, dont la surface spécifique n'est pas moins de 100 m²/g, étant ajoutés,
- la suspension est fournit à un procédé de façonnage et un corps vert est généré en tant qu'un pré-produit non-fritté, dont la densité n'est pas moins de 58% (2,31 g/cm³) de la densité frittée atteignable au maximum, et
- le corps vert est fritté jusqu'à ce qu'une densité frittée de pas moins de 3,93 g/cm³ (98,5%) soit atteinte.

5. Procédé selon la revendication 4, **caractérisé en ce que** les composés métal-fluor ajoutés sont des fluorures de métal de la forme générale MₓF_{y}, les symboles ayant la signification suivante: M = ion métallique de la deuxième, troisième ou quatrième groupe principal et de chaque groupe auxiliaire du tableau périodique; F = ion fluor; x = valence de l'ion métallique; y = nombre des ions fluor, avec la condition que x = y.

6. Procédé selon la revendication 4, **caractérisé en ce que** les composés métal-fluor ajoutés sont des hydroxofluorures de métal de la forme générale Mₓ(OR)_{x-y}F_{y}, les symboles ayant la signification suivante: M = ion métallique de la deuxième, troisième ou quatrième groupe principal et de chaque groupe auxiliaire du tableau périodique; F = ion fluor; OR = ion alcoxyde, dans lequel R peut être n'importe quel substituant, de préférence un ion hydrogène; x = valence de l'ion métallique; y = nombre des ions fluor, x-y = nombre des ions alcoxyde.

7. Procédé selon la revendication 5 ou 6, **caractérisé en ce que** les composés métal-fluor ajoutés sont ajoutés en tant que poudre nanoscopique et sèche.

8. Procédé selon la revendication 5 ou 6, **caractérisé en ce que** les composés métal-fluor ajoutés sont ajoutés en tant que sol.

9. Procédé selon la revendication 4, **caractérisé en ce que** la dispersion et homogénéisation sont effectuées à des pH entre 7 et 10.

10. Procédé selon la revendication 4, **caractérisé en ce que**, dans le but de déliantage thermique, le corps vert est chauffé à environ 1000 °C à un taux de 10 à 20 K/h et puis est refroidi à une température ambiante sur une période de 6 h, avec le résultat qu'un corps moulé appelé corps blanc est généré à partir du corps vert.

11. Procédé selon la revendication 10, **caractérisé en ce que** le corps moulé est chauffé à une température dans la plage de 1200 et 1400 °C à une augmentation de température de 2 K/min, est maintenu à cette température pour 2 h, et puis est refroidi à une température ambiante à une diminution de température de 10 K/min.

12. Procédé selon la revendication 11, **caractérisé en ce que** le corps moulé pré-fritté est redensifié au moyen de pressage isostatique à chaud à une pressure >100 MPa et une température dans la plage de 1150 à 1450 °C pour environ 2 h et, par conséquent, une densité frittée relative d'au moins 3,96 g/cm³ (99,3%) est atteinte.

13. Utilisation du matériau fritté à base de α-Al₂O₃ selon une des revendications 1 à 3 pour produire des composants à faible usure, des implants, des outils et parties des outils, des corps abrasifs, des diélectriques, des porteurs ou supports de stockages de données, des blindages balistiques et des céramiques à base de α-Al₂O₃ transparentes polycristallines.
